# EUROPÄISCHE PATENTSCHRIFT

(11) **EP 1 121 195 B1**
(45) Veröffentlichungstag und Bekanntmachung des Hinweises auf die Patenterteilung: **09.04.2003**
(21) Anmeldenummer: 99953813.5
(22) Anmeldetag: 14.10.1999
(51) Int. Cl.: B01F 13/00

(54) **VORRICHTUNG ZUM AUSTRAGEN EINES PASTÖSEN ZWEIKOMPONENTEN-GEMISCHES**
DEVICE FOR APPLYING A PASTY TWO-COMPONENT MIXTURE
DISPOSITIF POUR EVACUER UN MELANGE PATEUX A DEUX COMPOSANTS

(30) Priorität: 14.10.1998 DE 29818280 U
(43) Veröffentlichungstag der Anmeldung: 08.08.2001
(60) Teilanmeldung: 01108465.4
(73) Patentinhaber: Kettenbach GmbH & Co. KG, 35713 Eschenburg (DE)
(72) Erfinder: BUBLEWITZ, Alexander, D-35745 Herborn (DE); SUCHAN, Matthias, D-57627 Hachenburg (DE)
(74) Vertreter: Hilleringmann, Jochen, Dipl.-Ing.
(86) Internationale Anmeldenummer: EP9907704
(87) Internationale Veröffentlichungsnummer: WO00021653

(56) Entgegenhaltungen:
- EP-A- 0 319 639
- CH-A- 674 717
- DE-A- 3 823 708
- DE-A- 19 500 782
- US-A- 3 767 085
- US-A- 4 453 651
- US-A- 5 609 271

## Beschreibung

Die Erfindung betrifft eine Vorrichtung zum Austragen eines pastösen Zweikomponenten-Gemisches, bei dem es sich z.B. um ein Gemisch aus einer Dental-Abformmasse und einem die Aushärtung initiierenden bzw. beschleunigenden Katalysator handelt.

Zum Applizieren von Mehrkomponentenmaterialien als Gemisch sind Austragvorrichtungen bekannt, die ein Vorratsbehältnis mit mindestens zwei Kammern für jeweils eine der pastösen Komponenten des Gemisches aufweisen. Jeder Kammer ist ein Auslassstutzen zugeordnet, über den die pastöse Komponente bei Druckbeaufschlagung austritt. Damit die pastösen Komponenten als Gemisch ausgetragen werden können, wird bei den bekannten Vorrichtungen auf die Auslassstutzen eine Mischereinheit aufgesetzt, die ein Mischergehäuse mit einem im wesentlichen rohrförmigen Abschnitt und einem Kupplungsende zum Verbinden mit dem Vorratsbehältnis aufweist. In dem rohrförmigen Abschnitt des Mischergehäuses befindet sich ein Mischerelement, das zu einer Verwirbelung und Vermischung der über getrennte Kanäle zugeführten Komponenten sorgt. Diese Kanäle sind in dem Kupplungsende des Mischergehäuses ausgebildet und erstrecken sich von zwei Einlassstutzen des Kupplungsendes bis zum Mischerelement. Eine derartige Vorrichtung ist beispielsweise in EP-A-0 730 913 und US-A-5609271 beschrieben.

Je nach der Zusammensetzung der pastösen Komponenten kommt es bei deren Vermischung zu den jeweils gewünschten chemischen Reaktionen. Handelt es sich beispielsweise bei einer der beiden pastösen Komponenten um eine Dental-Abformmasse, so wird durch Zugabe einer zweiten Komponente die Polymerisation dieser Abformmasse initiiert und beschleunigt. Tritt diese zweite Komponente (auch Katalysator genannt) über die Mischereinheit aus der einen Kammer des Vorratsbehältnisses in die andere bzw. wird auch nur der Auslassstutzen der Kammer für die Dental-Abformmasse mit dem Katalysator kontaminiert, so wird die gesamte Vorrichtung unbrauchbar, was je nach dem Füllungsgrad der Kammern mit einem nicht unerheblichen Verlust an hochwertigem Material verbunden ist. Daher müssen die beiden Komponentenströme über eine möglichst lange Wegstrecke voneinander getrennt bleiben und erst im rohrförmigen Abschnitt des Mischergehäuses zusammengebracht werden.

Bei der bekannten Austragvorrichtung für pastöse Zweikomponenten-Gemische wird das Mischergehäuse an seinem Kupplungsende mittels einer Haltehülse am Vorratsbehältnis lösbar arretiert. Die Haltehülse ist drehbar an dem Mischergehäuse gelagert und weist nach Art eines Bajonettverschlusses ausgebildete radial auswärts gerichtete Verankerungsvorsprünge auf, die bei Drehung unter korrespondierende Übergreifvorsprünge des Vorratsbehältnisses bewegbar sind.

Austragvorrichtungen werden intermittierend benutzt, wobei der Zeitraum zwischen zwei aufeinanderfolgenden Benutzungen derart groß sein kann, dass das Gemisch in der Mischereinheit aushärtet. Damit muss die Mischereinheit abgenommen und gegen eine neue ersetzt werden, bevor wieder Gemisch ausgetragen werden kann. Bei der Mischereinheit handelt es sich also um ein Einwegteil, bei dem man bestrebt sein sollte, die Anzahl der Teile der Wegwerf-Mischereinheit so gering wie möglich zu halten.

Der Erfindung liegt die Aufgabe zugrunde, eine Vorrichtung zum Austragen eines pastösen Zweikomponenten-Gemisches mit einer Mischereinheit zu schaffen, die eine reduzierte Anzahl an Einzelteilen aufweist.

Zur Lösung dieser Aufgabe wird mit der Erfindung eine Vorrichtung zum Austragen eines pastösen Zweikomponenten-Gemisches gemäß Anspruch 1 vorgeschlagen; die Unteransprüche betreffen diverse Weiterbildungen der Erfindung.

Bei der erfindungsgemäßen Austragvorrichtung befindet sich die die Mischereinheit haltende Haltehülse nicht am Mischergehäuse sondern am Vorratsbehältnis. An diesem Vorratsbehältnis ist die Haltehülse um ihre Längsachse drehbar gelagert. Die Haltehülse umgibt die beiden Auslassstutzen des Vorratsbehältnisses und weist an ihrem dem Vorratsbehältnis abgewandten vorderen Ende eine Ausnehmung auf, die in einer ersten Drehstellung der Haltehülse (Aufnahmedrehposition) das Aufstecken des Mischergehäuses auf die Auslassstutzen des Vorratsbehältnisses ermöglicht, während der die Ausnehmung begrenzende Rand der Haltehülse in einer zweiten Drehstellung (Verriegelungsdrehposition) über Teilbereiche des Kupplungsendes, beispielsweise über radial abstehende Flanschabschnitte des Kupplungsendes des Mischergehäuses, bewegt ist und somit das Mischergehäuse an dem Vorratsbehältnis verriegelt. Die Haltehülse ist also nicht mehr Bestandteil der Mischereinheit, bleibt also für die gesamte Dauer, während derer die Austragvorrichtung zum Applizieren des Zweikomponenten-Gemisches verwendet wird, erhalten.

In vorteilhafter Weiterbildung der Erfindung weist das Kupplungsende zwei diametral gegenüberliegende und radial abstehende Vorsprünge auf, während die Haltehülse eine der Querschnittsform des Kupplungsendes in Höhe von dessen Vorsprüngen formgleiche Ausnehmung aufweist. Insbesondere ist das Kupplungsende des Mischergehäuses im Bereich der radialen Vorsprünge im wesentlichen oval ausgebildet. In ihrer Aufnahmedrehposition ist die Ausnehmung der Haltehülse relativ zur Anordnung der Auslassstutzen des Vorratsbehältnisses so ausgerichtet wie die Einlassstutzen des Mischergehäuses relativ zu den Außenvorsprüngen. Damit lässt sich das Kupplungsende des Mischergehäuses durch die stirnseitige Ausnehmung der Haltehülse hindurch bewegen, bis die Einlassstutzen des Mischergehäuses von den Auslassstutzen des Vorratsbehältnisses oder umgekehrt aufgenommen sind. In dieser Position befindet sich der Ausnehmungsrand der Haltehülse oberhalb der Außenvorsprünge am Kupplungsende des Mischergehäuses, so dass durch Verdrehen der Haltehülse in die Verriegelungsdrehposition Bereiche des Ausnehmungsrandes die Außenvorsprünge übergreifen. Zweckmäßigerweise ist die Haltehülse in beiden dieser Drehpositionen gegen eine unbeabsichtigte Weiterverdrehung bzw. Zurückverdrehung gesichert, was zweckmäßigerweise durch eine entsprechende Verrastung erfolgt. Für die Handhabung der Haltehülse ist es ferner zweckmäßig, wenn sich diese lediglich zwischen ihrer Aufnahmedrehposition und ihrer Verriegelungsdrehposition verdrehen lässt. Hier bietet es sich an, die Drehbewegungsbegrenzung durch korrespondierende Anschlagelemente an der Haltehülse und dem Vorratsbehältnis zu realisieren.

Vorteilhafterweise ist die erfindungsgemäße Vorrichtung mit einem Anstechröhrchen versehen, das in dem Austragstutzen einer Aufnahmekappe axial verschiebbar geführt ist. Durch diesen Austragstutzen gelangt bei geöffnetem Schlauchbeutel die pastöse Masse heraus, um direkt aufgetragen oder, im Falle eines Zweikomponentenmaterials, mit einer anderen Komponente der pastösen Masse vermischt zu werden. Der Austragstutzen ist an der Stirnwand der Aufnahmekappe von dieser abstehend angeordnet, wobei von der Stimwand in zum Austragstutzen entgegengesetzter Richtung ein umlaufender Rand absteht. Auf diese Weise umgibt die Aufnahmekappe eines der beiden stirnseitigen Enden des Schlauchbeutels, dessen Stirnfläche an der Stirnwand der Aufnahmekappe in einer von dieser gebildeten Anlagefläche anliegt. Das Anstechröhrchen der erfindungsgemäßen Vorrichtung ist manuell aus einer Rückzugsposition in eine Vorschubposition verschiebbar. Diese Verschiebung kann entweder direkt manuell erfolgen, indem das Anstechröhrchen von Hand innerhalb des Stutzens verschoben wird, oder aber indirekt erfolgen, indem ein Betätigungselement manuell bewegt wird, das wiederum über eine Anlagefläche an dem Anstechröhrchen anliegt und damit bei eigener Bewegung das Anstechröhrchen mitbewegt. In beiden Fällen lässt sich das Anstechröhrchen aus der Rückzugsposition, in der es nicht über die von der Stirnwand gebildeten Anlageebene der Aufnahmekappe übersteht, in die Vorschubposition verschieben, in der es über die Anlageebene übersteht und damit bei von der Aufnahmekappe aufgenommenem Folienschlauchbeutel in dessen Stirnfläche eintaucht und den Schlauchbeutel eröffnet. Das Anstechröhrchen kann werksseitig in den Stutzen eingebracht sein und befindet sich somit in seiner Rückzugsposition. Alternativ dazu ist es möglich, dass das Anstechröhrchen von dem Benutzer in den Stutzen eingeführt wird. In beiden Fällen ist es zweckmäßig, wenn das Anstechröhrchen in seiner Rückzugsposition durch eine Verrastung o.dgl. gegen ein unbeabsichtigtes Bewegen aus der Rückzugsposition heraus gesichert ist. Dies ist vorteilhaft für den Anwender, für den sich damit die Rückzugsposition taktil als eine definierte Position des Anstechröhrchens darstellt.

Der Vorteil der zuvor beschriebenen Vorrichtung besteht darin, dass der Vorgang des Öffnens des Schlauchbeutels von dem Vorgang des Austragens der pastösen Masse aus dem Schlauchbeutel getrennt ist. Damit steht der Schlauchbeutel beim Öffnen nicht mehr unter einem erhöhten Druck, so dass versehentlich beim Öffnen auch keine pastöse Masse mehr aus dem Schlauchbeutel austreten kann. Dies vereinfacht die Handhabung der Schlauchbeutel.

Die erfindungsgemäße Vorrichtung lässt sich sowohl bei Aufnahmekappen für einen einzigen Schlauchbeutel als auch bei kombinierten Aufnahmekappen für mehrere, beispielsweise zwei Schlauchbeutel, einsetzen. Im letztgenannten Fall weist die Aufnahmekappe mehrere Austragstutzen auf, die jeweils mit einem Anstechröhrchen versehen sind. Diese Anstechröhrchen können untereinander verbunden sein, um sie gemeinsam in die jeweiligen Schlauchbeutel hineinzutreiben. Es ist aber durchaus auch möglich, dass die Anstechröhrchen untereinander nicht verbunden sind, so dass jeder Schlauchbeutel separat "angestochen" werden kann.

Besonders einfach ist es, wenn das Anstechröhrchen in seiner Rückzugsposition über das der Stirnwand der Aufnahmekappe abgewandten Austragende übersteht. Dann nämlich lässt sich die Axialverschiebung des Anstechröhrchens durch einfaches Hineinbewegen in den Stutzen realisieren. Sobald das Anstechröhrchen vollständig in den Stutzen hineinbewegt worden ist, ist die Vorschubposition erreicht und das Anstechröhrchen in den Schlauchbeutel hineingetrieben.

Zweckmäßigerweise ist das Anstechröhrchen sowohl in seiner Vorschubposition gegen unbeabsichtigte Zurückbewegungen in Richtung auf die Rückzugsposition als auch in seiner Rückzugsposition gegen ungewollte Bewegungen in die Vorschubposition gesichert. Dies kann, wie weiter oben schon erwähnt, durch eine Verrastung des Anstechröhrchens in bzw. an dem Stutzen erfolgen.

Sofern das Anstechröhrchen nicht direkt manuell sondern über ein Betätigungselement indirekt manuell bewegt wird, kann dieses Betätigungselement als Sicherung zum Schutze des Anstechröhrchens vor unbeabsichtigten Bewegungen aus der Rückzugsposition in die Vorschubposition genutzt werden. Das Betätigungselement ist zweckmäßigerweise nach Art eines auf dem Stutzen angeordneten Hülsenelements ausgebildet, das sich axial über den Stutzen verschieben lässt. Dieses Hülsenelement ist in zwei axialen Positionen, die der Rückzugsposition und der Vorschubposition des Anstechröhrchens entsprechen, am Stutzen bzw. an der Aufnahmekappe gegen unbeabsichtigte Axialbewegungen verriegelbar. Vorteilhafterweise ist das Hülsenelement als Schraubelement ausgebildet, das einen Innengewindeabschnitt aufweist, der mit einem Außengewindeabschnitt am Stutzen in Eingriff bringbar ist. Durch diese beiden Gewindeabschnitte lässt sich das Hülsenelement axial verschieben, um das Anstechröhrchen in den Folienschlauch hineinzutreiben. Sowohl das Hülsenelement als auch der Stutzen weisen beidseitig ihrer Gewindeabschnitte Bereiche auf, die frei von Gewinden sind. So lange die beiden Gewindeabschnitte nicht in Gewindeeingriff miteinander sind, führt eine Verdrehung des Hülsenelements nicht zu einer axialen Verschiebung. Darüber hinaus verhindern die beiden nicht in Gewindeeingriff miteinander stehenden Gewindeabschnitte eine lineare axiale Verschiebung des Hülsenelements. Damit ist dieses vor und nach dem Gewindeeingriff der beiden Gewindeabschnitte gegen ungewollte axiale Bewegungen gesichert.

Nachfolgend werden anhand der Figuren Ausführungsbeispiele der Erfindung näher erläutert. Im einzelnen zeigen:
- Fig. 1: eine Seitenansicht einer Austragvorrichtung für pastöse Zweikomponenten-Gemische (insbesondere Dental-Abformmassen mit Katalysator), wobei die Mischereinheit in ihrem kurz vor der Kupplung mit dem Vorratsbehältnis befindlichen Zustand dargestellt ist,
- Fig. 2: eine Draufsicht auf das vordere Ende des Vorratsbehältnisses, an dem die Mischereinheit befestigt wird, wobei sich die an diesem Ende des Vorratsbehältnisses angeordnete Haltehülse in ihrer Aufnahmedrehposition befindet,
- Fig. 3: eine Seitenansicht, teilweise geschnitten, der Austragvorrichtung mit angekuppelter Mischereinheit,
- Fig. 4: einen Schnitt entlang der Linie IV-IV der Fig. 3 mit in ihrer Verriegelungsdrehposition befindlicher Haltehülse, und
- Fign. 5 bis 7: ein weiteres Ausführungsbeispiel einer Vorrichtung zum gleichzeitigen Öffnen zweier Schlauchbeutel, wobei die Vorrichtung in unterschiedlichen Betriebszuständen dargestellt ist.

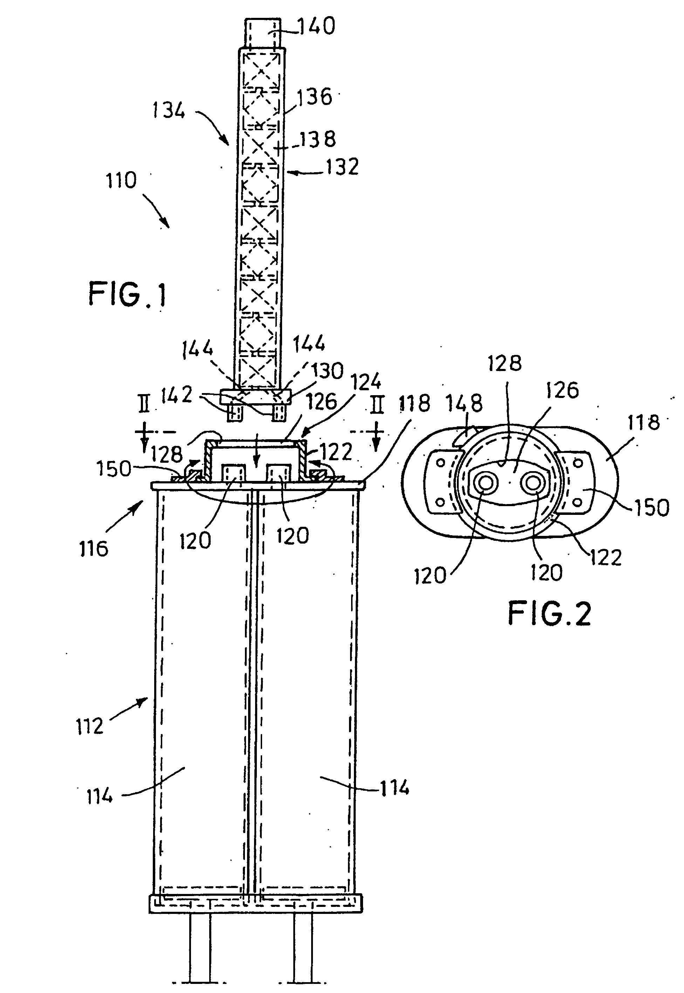

Fig. 1 zeigt teilweise geschnitten eine Seitenansicht einer Auftragvorrichtung 110 für pastöse Zweikomponenten-Gemische. Die Auftragvorrichtung 110 umfasst ein starres Vorratsbehältnis 112 mit zwei im wesentlichen zylindrischen Kammern 114 zur Aufnahme jeweils einer pastösen Komponente. Am vorderen Ende 116 weist das Vorratsbehältnis 112 eine Stirnwand 118 auf, von der zwei mit jeweils einer der Kammern 114 korrespondierende Auslassstutzen 120 abstehen. Um die Auslassstutzen 120 herum ist ein Aufhahmekragen oder eine Haltehülse 122 angeordnet, die drehbar an der Stirnwand 118 des Vorratsbehältnisses 112 gelagert ist. Die Haltehülse 122 weist an ihrem über die Auslassstutzen 120 vorstehenden und der Stirnwand 118 abgewandten vorderen Ende 124 eine Aussparung 126 in Form einer von einem Aussparungsrand 128 allseitig umschlossenen Öffnung auf.

In die Haltehülse 122 wird das Kupplungsende 130 einer Mischereinheit 132 eingeführt, die ein Mischergehäuse 134 mit einem rohrförmigen Abschnitt 136 aufweist. In dem rohrförmigen Abschnitt 136 befindet sich ein Mischerelement 138. Der rohrförmige Abschnitt 136 weist ein Auslassende 140 auf, während das Kupplungsende 130 zwei Einlassstutzen 142 mit sich von diesen aus bis zum Mischerelement 138 erstreckenden getrennten Kanälen 144 aufweist.

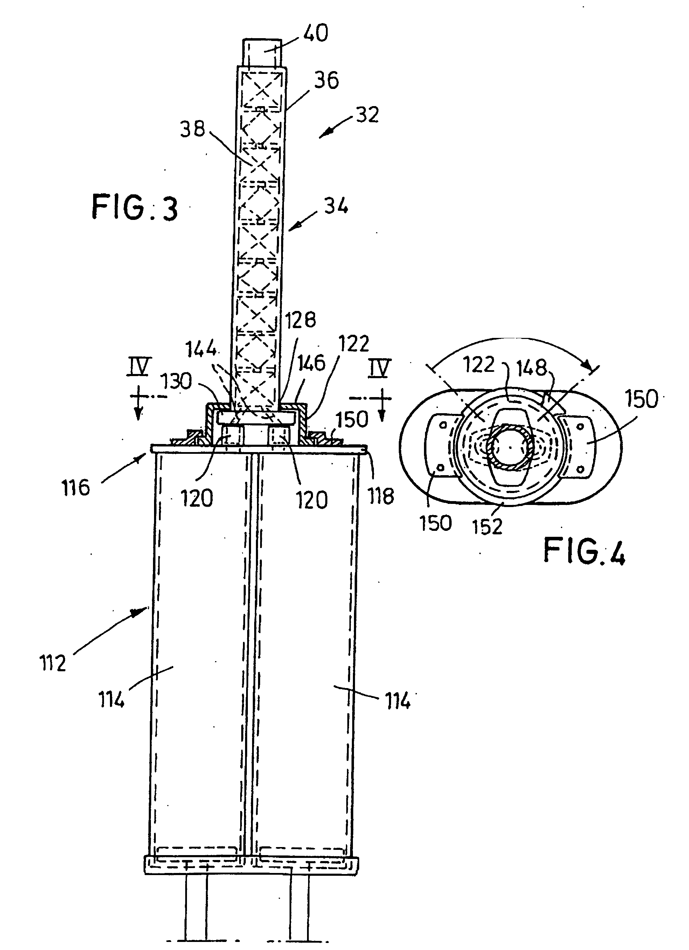

Wie insbesondere in der Draufsicht gemäß Fig. 2 zu erkennen ist, weist die Öffnung 126 im wesentlichen eine Ovalform auf. Korrespondierend zu dieser Öffnungsform ist das Kupplungsende 130 des Mischergehäuses 134 ausgebildet. Somit lässt sich die Mischereinheit132 bei Ausrichtung der Haltehülse 122 gemäß Fig. 2 mit dem Kupplungsende 130 durch die Öffnung 126 hindurchbewegen, bis die Einlassstutzen 142 von den Auslassstutzen 120 aufgenommen sind. Durch anschließendes Verdrehen übergreift der Öffnungsrand 128 der Haltehülse 122 die beiden diametral gegenüberliegenden und radial abstehenden Schulterflächen 146 im Übergangsbereich zwischen dem rohrförmigen Abschnitt 134 und dem flanschartigen Kupplungsende 130 der Mischereinheit 132. Diese Verriegelungsdrehposition ist in den Fign. 3 und 4 gezeigt. In dieser Verdrehposition der Haltehülse 122 übergreift diese also mit einem Teil ihres Öffnungsrandes 128 das Kupplungsende 130 der Mischereinheit 132 und hält damit die Mischereinheit 132 im mit dem Vorratsbehältnis 112 verbundenen Betriebszustand.

Als Einwegartikel braucht bei der hier beschriebenen Austragvorrichtung lediglich noch die Mischereinheit 132 ohne die Haltehülse 122 konzipiert zu sein. Dies reduziert das Volumen an Einwegmaterial für die Mischereinheit 132, was sich vorteilhaft bezüglich der Ökobilanz und darüber hinaus bezüglich der Herstellungskosten auswirkt.

In den Fign. 2 und 4 ist noch angedeutet, dass die Haltehülse 122 in ihren beiden in diesem Ausführungsbeispiel um 90° voneinander versetzten Drehendstellungen bezüglich jeweils einer weiteren Verdrehung gesichert ist. Dies wird durch ein radial abstehendes Anschlagelement 148 an der Haltehülse 122 realisiert, das gegen jeweils ein an der Stirnwand 118 angeordnetes Gegenelement 150 anschlägt. Die beiden Gegenelemente 150 sind diametral gegenüberliegend angeordnet und übergreifen einen Ringflansch 152 der Haltehülse 122, sorgen also neben ihrer Funktion als Drehbegrenzung auch für die drehbare Lagerung der Haltehülse 122 an dem Vorratsbehältnis 112.

Durch entsprechende Formgebung der Öffnung 126 der Haltehülse 122 ist es möglich, das Interface zwischen der Mischereinheit 132 und dem Vorratsbehältnis 112 zu kodieren, so dass sich die Mischereinheit 132 lediglich in einer bestimmten Ausrichtung der Mischereinheit 132 und der Haltehülse 122 aufsetzen lässt. Diese Kodierung kann aber auch durch zusätzliche zusammengreifende Vorsprungs- und Ausnehmungselemente an der Mischereinheit 132 und dem Vorratsbehältnis 112 realisiert sein. Z.B. könnten die Auslassstutzen 120 und damit auch die Einlassstutzen 142 unterschiedliche Durchmesser oder Formen aufweisen.

Das Mischer-Interface ist vorstehend in seiner Anwendung bei einem starren Vorratsbehältnis mit statischem Mischer beschrieben, lässt sich aber auch bei sogenannten dynamischen Mischern einsetzen, die über eine drehend angetriebene Mischerwelle verfügen. Ferner kann die Kupplung des Mischers auch bei einem Druckbehälter für in Schlauchbeuteln untergebrachtes pastöses Material realisiert werden. Derartige Systeme benötigen spezielle Öffnungsmechanismen, mit denen sich die Schlauchbeutel eröffnen lassen. Nachfolgend wird ein derartiges Schlauchbeutel-Eröffnungssystem beschrieben.

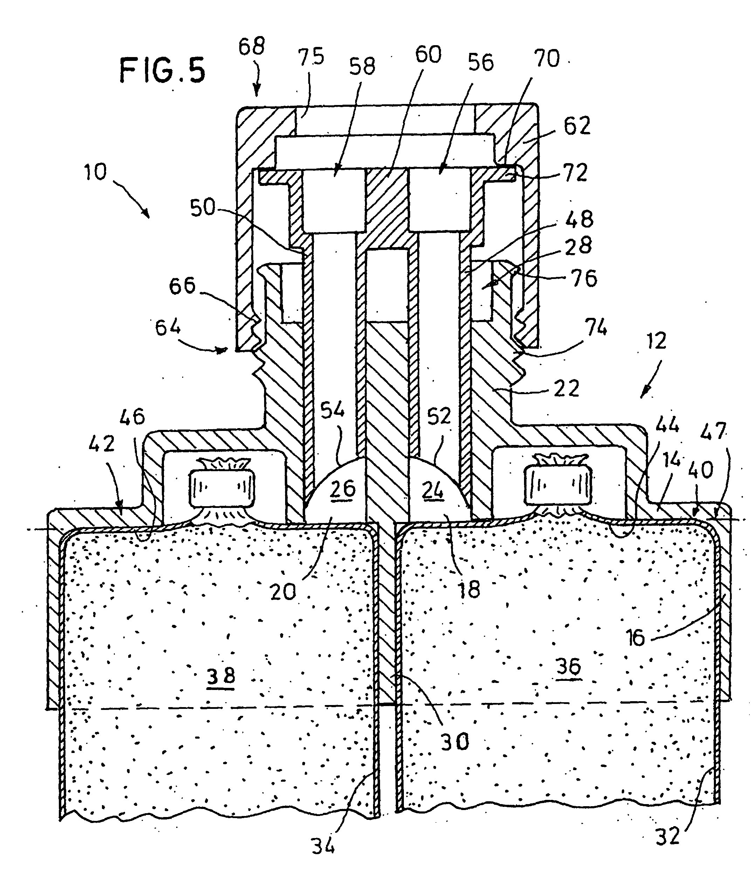

In den Fign. 5 bis 7 ist ein erstes Ausführungsbeispiel einer Vorrichtung 10 zum Öffnen zweier Schlauchbeutel dargestellt. Die Vorrichtung 10 weist eine Aufnahmekappe 12 auf, der mit einer Stirnwand 14 und einem von dieser abstehenden Rand 16 versehen ist. In der Stirnwand 14 befinden sich zwei Öffnungen 18,20, in deren Bereich von der Stirnwand 14 in zum Rand 16 entgegengesetzter Richtung ein Stutzen 22 absteht. In dem Stutzen 22 befinden sich zwei von den Öffnungen 18,20 aus sich erstreckende Kanäle 24,26, die bis zum der Stirnwand 14 abgewandten Austragende 28 des Stutzens 22 verlaufen. Die Stirnwand 14 weist zwischen den beiden Öffnungen 18,20 eine Trennwand 30 auf, die in Richtung des Randes 16 von der Stirnwand 14 absteht. Auf diese Weise entstehen zwei Aufnahmeräume für zwei Schlauchbeutel 32,34, die jeweils eine pastöse Masse 36,38 beinhalten. Die stirnseitigen Enden 40,42 der beiden Schlauchbeutel 32,34 sind von der Aufnahmekappe 12 bzw. dem Rand 16 und der Zwischenwand 30 umgeben, wobei die Stirnflächen 44,46 der Schlauchbeutel 32,34 entlang einer Anlageebene 47 an der Stirnwand 14 der Aufnahmekappe anliegen. Die Schlauchbeutel 32,34 können mit der Aufnahmekappe 12 fest verbunden sein, was beispielsweise durch Verklebung erfolgt.

In jedem Kanal 24,26 befindet sich ein Anstechröhrchen 48,50, das ein angeschrägtes und damit spitz zulaufendes Anstechende 52,54 aufweist. Die beiden Anstechröhrchen 48,50 sind axial verschiebbar in den Kanälen 24,26 angeordnet und stehen in ihrer Rückzugsposition gemäß Fig. 5 über das Austragende 28 des Stutzens 22 über. An ihren den Anstechenden 52,54 abgewandten Enden 56,58 sind die beiden Anstechröhrchen 48,50 untereinander verbunden, was bei 60 dargestellt ist. Aufgabe der Anstechröhrchen 48,50 ist es zum einen, durch Eindringen in die Stirnflächen 44,46 die Schlauchbeutel 32,34 zu öffnen, und zum anderen bei geöffneten Schlauchbeuteln 32,34 die pastösen Massen 36,38 zwecks Ausbringung derselben passieren zu lassen.

Auf dem Stutzen 22 befindet sich eine Schraubkappe 62, die als Betätigungselement zum axialen Verschieben der Anstechröhrchen 48,50 dient. Die Schraubkappe 62 ist im' wesentlichen zylindrisch und weist an ihrem der Aufnahmekappe 12 zugewandten einen Ende 64 einen Innengewindeabschnitt 66 auf. An dem anderen Ende 68 ist die Schraubkappe 62 mit einer Innenschulter 70 versehen, die an einem umlaufenden Radialflansch der beiden Anstechröhrchen 48,50 anliegt. Zwischen der Innenschulter 70 und dem Innengewindeabschnitt 66 ist die Schraubkappe 62 an ihrer Innenseite glatt und vorsprungsfrei ausgebildet.

Im längs seiner axialen Erstreckung mittleren Teil weist der Stutzen 22 einen Außengewindeabschnitt 74 auf, der mit dem Innengewindeabschnitt 66 der Schraubkappe 62 in Gewindeeingriff bringbar ist. Oberhalb und unterhalb des Außengewindeabschnitts 74 des Stutzens 22 weist dieser glatte vorsprungsfreie Bereiche auf, deren Axialerstreckung gleich bzw. geringfügig größer als die Axialerstreckung des Innengewindeabschnitts 66 ist. An seinem der Aufnahmekappe 22 abgewandten vorderen Ende 28 ist der Stutzen 22 mit einem außenliegenden Sicherungsvorsprung 76 versehen.

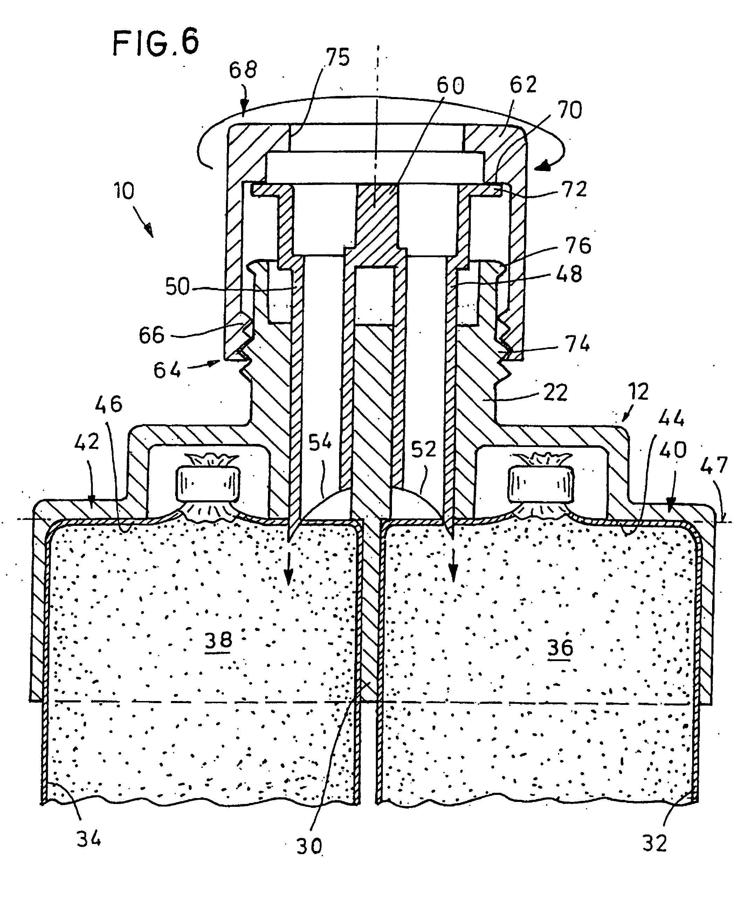

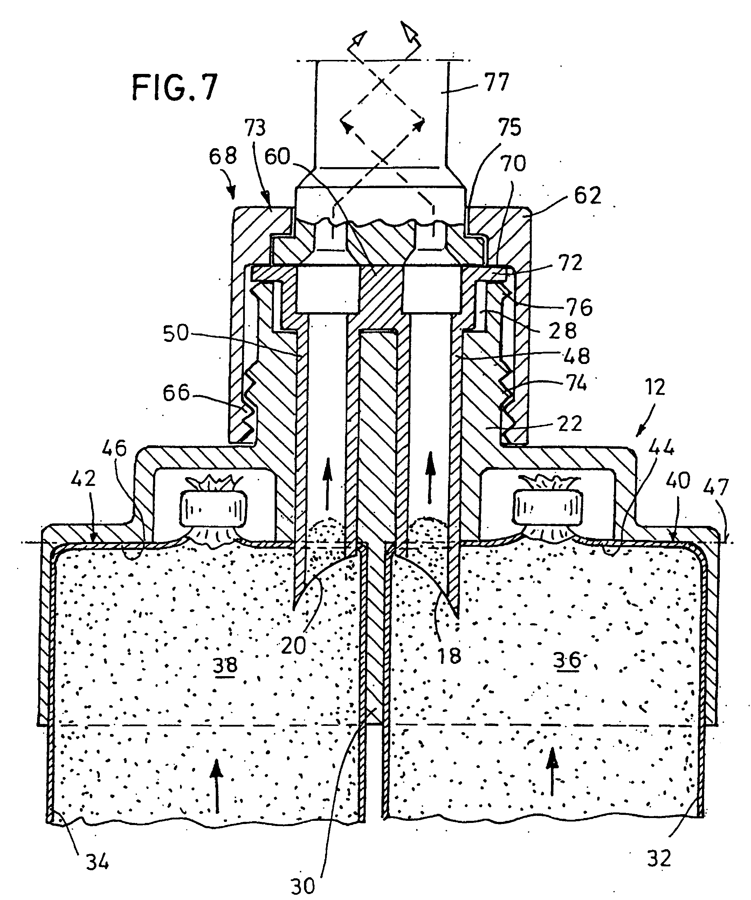

Die Schraubkappe 62 wird werksseitig über den Sicherungsvorsprung 76 auf den Stutzen 22 geschoben, bis sich der Innengewindeabschnitt 66 zwischen dem Sicherungsvorsprung 76 und dem Außengewindeabschnitt 74 des Stutzens 22 befindet (siehe Fig. 5). In dieser Situation befinden sich die Anstechdorne 48,50, die vor der Schraubkappe 62 in die Kanäle 24,26 eingesetzt worden sind, in ihrer Rückzugsposition, in der ihre Anstechspitzen 52,54 nicht über die Anlageebene 47 vorstehen. In dieser Rückzugsposition verbleiben die Anstechdorne 48,50 auch dann, wenn auf die Schraubkappe 62 in axialer Richtung eine Kraft ausgeübt wird, da die Innengewinde- und Außengewindeabschnitte 66,74 eine Bewegung der Kappe 62 verhindern. Erst durch Drehen der Schraubkappe 62 bei gleichzeitig aufgebrachtem geringen axialen Andruck bewegt sich die Schraubkappe 62 in axialer Richtung, da die beiden Gewindeabschnitte 66,74 in Gewindeeingriff miteinander kommen bzw. sind (siehe Fig. 6). Durch diese axiale Bewegung der Schraubkappe 62 werden die Anstechdorne 48,50 ebenfalls axial vorbewegt, so dass ihre Anstechspitzen 52,54 in die Stirnflächen 44,46 der Schlauchbeutel 32,34 einstechen. Die Anstechdorne 48,50 befinden sich vollständig in ihrer Vorschubposition, in der ihre Anstechspitzen 52,54 über die Anlageebene 47 überstehen, wenn die beiden Gewindeabschnitte 66,74 mit weiterer Verdrehung der Schraubkappe 62 wiederum außer Eingriff miteinander gebracht sind (siehe Fig. 7). In dieser Situation ist eine axiale Verschiebung der Schraubkappe 62 wiederum durch die sich blockierenden Gewindeabschnitte 66,74 verhindert, so dass die Anstechdorne 48,50 in ihrer Vorschubposition gesichert sind.

Nun kann, wie in Fig. 7 angedeutet, mit den Anstechdornen 48,50 ein dynamischer oder statischer Mischer 77 verbunden werden, in dem das durch die Anstechdorne 48,50 gelangende pastöse Material 36,38 miteinander vermischt wird. Der Mischer 77 ist an der Schraubkappe 62 gehalten, und zwar genauso, wie die Mischereinheit 132 mittels der Haltehülse 122 an dem Vorratsbehältnis 112 gemäß Fign. 1 bis 4 gehalten ist. Die Schraubkappe 62 hat also eine Doppelfunktion, indem sie ausgehend von Fig. 6 zunächst der Vorbewegung der Anstechdorne 48,50 bis in die Schlauchbeutel 32,34 hinein dient (Fign. 7 und 8), um dann durch entsprechende Drehpositionierung für die "passende Ausrichtung" ihrer Öffnung 75 relativ zum Kupplungsende 73 des Mischers 77 zu sorgen, so dass sich dieses Kupplungsende 73 von oben in die Schraubkappe 62 einführen lässt. Anschließend wird dann die Schraubkappe 62 verdreht, um die Fixierung des Mischers 77 nach Art eines Bajonett-Verschlusses, wie in Fign. 1 bis 4 näher beschrieben, zu ermöglichen. Diese Verdrehungen der Schraubkappe 62 erfolgen in der Position gemäß Fig. 7, in der die Schraubkappe 62 außer Gewindeeingriff mit dem Stutzen 22 steht.

Die Arretierung der Schraubkappe 62 in jeweils deren Aufnahmedrehposition und der Verriegelungsposition und die Begrenzung der Verdrehung, wie es im Zusammenhang mit der Haltehülse 122 gemäß dem Ausführungsbeispiel der Fign. 1 bis 4 beschrieben ist, lässt sich durch Verrastung der Schraubkappe 62 mit der Aufnahmekappe 12 realisieren. Da der axiale Abstand der Schraubkappe 62 von der Aufnahmekappe 12 beim Aufschrauben auf den Stutzen 22 zwecks Vorbewegung der Anstechdorne 48,50 zu den Verhältnissen in der Position gemäß Fig. 7 unterschiedlich ist, kann die Verrastung und Bewegungsbegrenzung konstruktiv so ausgebildet sein, dass hierzu erforderliche Rastvorsprünge und - vertiefungen sowie Anschläge erst dann zusammenwirken, wenn die Gewindeabschnitte 66,74 gemäß Fig. 7 außer Eingriff sind.

## Patentansprüche

1. Vorrichtung zum Austragen eines pastösen Zweikomponenten-Gemisches mit
- einem Vorratsbehältnis (112) mit zwei Kammern (114) für jeweils eine pastöse Komponente des Gemisches, wobei das Vorratsbehältnis (112) für jede Kammer (114) einen Auslassstutzen (120) aufweist,
- einer Mischereinheit (132), die ein rohrförmiges Mischergehäuse (134) mit einem darin angeordneten Mischerelement (138) aufweist, wobei das Mischergehäuse (134) ein mit dem Vorratsbehältnis (112) kuppelbares Kupplungsende (130) mit zwei Einlassstutzen (142) sowie zwei zum Mischerelement (136) führenden Kanälen (144) für die pastösen Komponenten des Gemisches und an seinem gegenüberliegenden Ende eine Auslassöffnung (140) für das Gemisch aufweist und die Einlassstutzen (142) in die Auslassstutzen (120) oder umgekehrt einsteckbar sind, und
- eine drehbar an dem Vorratsbehältnis (112) gelagerten und unverlierbar an dem Vorratsbehältnis (112) gehaltenen Haltehülse (122) für das Kupplungsende (130) des Mischergehäuses (134), wobei die Haltehülse (122) die beiden Auslassstutzen (120) umgibt und eine Ausnehmung (126) aufweist, deren Form zumindest abschnittsweise im wesentlichen gleich der Querschnittsform des Kupplungsendes (130) des Mischergehäuses (134) ist, wobei die Haltehülse (122) zwischen einer Aufnahmedrehposition, in der die Ausnehmung (126) entsprechend der Ausrichtung des Kupplungsendes (130) des Mischergehäuses (134) bei mit den Auslassstutzen (120) des Vorratsbehältnisses (112) verbundenen Einlassstutzen (142) ausgerichtet ist, und einer Verriegelungsdrehposition drehbar ist, in der zumindest ein Teil des Ausnehmungsrandes (128) der Haltehülse (122) Teile des Kupplungsendes (130) des Mischergehäuses (134) übergreift.

2. Vorrichtung nach Anspruch 1, **dadurch gekennzeichnet, dass** das Kupplungsende (130) des Mischergehäuses (134) eine im wesentlichen ovale Querschnittsform aufweist und zwei diametral gegenüberliegende, radial über den rohrförmigen Teil des Mischergehäuses (134) überstehende Flanschabschnitte (146) zum Übergreifen durch den Ausnehmungsrand (128) der Haltehülse (122) in dessen Verriegelungsdrehposition aufweist.

3. Vorrichtung nach Anspruch 1 oder 2, **dadurch gekennzeichnet, dass** an dem Vorratsbehältnis (112) und der Haltehülse (122) zusammenwirkende Anschlagelement (148,150) zur Begrenzung der Drehbewegung der Haltehülse (122) zwischen dessen Aufnahme- und dessen Verriegelungsdrehposition angeordnet sind.

4. Vorrichtung nach einem der Ansprüche 1 bis 3, **dadurch gekennzeichnet, dass** an dem Vorratsbehältnis (112) und der Haltehülse (122) Einrichtungen zur Verhinderung einer unbeabsichtigten Weiter- und/oder Zurückdrehung der Haltehülse (122) in deren Aufnahme- und Verriegelungsdrehposition angeordnet sind.

5. Vorrichtung nach einem der Ansprüche 1 bis 4, **dadurch gekennzeichnet, dass** das Vorratsbehältnis (12;122) eine Stirnwand (118;14;14') aufweist, die eine Anlageebene (47) für die Stirnflächen (44,46;44',46') zweier in die Kammern (114) einsetzbarer Schlauchbeutel (32,34; 32',34') aufweist, dass in den beiden Auslassstutzen (120;22,22') jeweils ein axial verschiebbares Anstechröhrchen (48,50;48',50') angeordnet ist und dass die Anstechröhrchen (48,50;48',50') manuell aus einer Rückzugsposition, in der die Anstechröhrchen (48,50;48',50') nicht über die Anlageebene (47;47') vorstehen, in eine Vorschubposition verschiebbar sind, in der die Anstechröhrchen (48;50;48';50') über die Anlageebene (47;47') überstehen.

6. Vorrichtung nach Anspruch 5, **dadurch gekennzeichnet, dass** die Anstechröhrchen (48,50;48',50') in ihren Vorschubposltionen gegen unbeabsichtigte Zurückbewegung in Richtung auf die Rückzugspositionen gesichert in den Stutzen (120;22;22') angeordnet sind.

7. Vorrichtung nach Anspruch 5 oder 6, **dadurch gekennzeichnet, dass** die Anstechröhrchen (48,50;48',50') in ihren Rückzugspositionen über das der Stirnwand (118;14;14') abgewandte Austragende (28;28') der Stutzen (120;22;22') überstehen.

8. Vorrichtung nach einem der Ansprüche 5 bis 7, **dadurch gekennzeichnet, dass** die Anstechröhrchen (48,50;48';50') in ihren Rückzugspositionen gegen unbeabsichtigte Bewegungen in Richtung auf die Vorschubpositionen gesichert in den Stutzen (22;22') angeordnet sind.

9. Vorrichtung nach Anspruch 7 und 8, **dadurch gekennzeichnet, dass** über das Austragende (28') der Stutzen (22') eine abnehmbare Abdeckkappe (78) stülpbar und an den Stutzen (22') fixierbar ist.

10. Vorrichtung nach Anspruch 7 und 8, **dadurch gekennzeichnet, dass** die Anstechröhrchen (48",50") an ihren dem Vorratsbehältnis (112) abgewandten Enden einen Außenvorsprung (72") aufweisen und dass zwischen den Außenvorsprüngen (72") und den Austragenden (28") der Stutzen (22") ein entfernbarer Abstandshalter (84) positionierbar ist.

11. Vorrichtung nach einem der Ansprüche 5 bis 10, **dadurch gekennzeichnet, dass** außen um die Stutzen (22) ein axial verschiebbares Betätigungselement (62) zum Bewegen der Anstechröhrchen (48,50) aus den Rückzugspositionen in die Vorschubpositionen angeordnet ist, wobei das Betätigungselement (62) eine Anlagefläche (70) zur Anlage an den Anstechröhrchen (48,50) aufweist.

12. Vorrichtung nach Anspruch 11, **dadurch gekennzeichnet, dass** das Betätigungselement (62) in zwei Bewegungspositionen an den Stutzen (22) und/oder an dem Vorratsbehältnis (12) gegen unbeabsichtigte Axialbewegungen verriegelbar ist.

13. Vorrichtung nach Anspruch 12, **dadurch gekennzeichnet, dass** das Betätigungselement (62) einen Innengewindeabschnitt (66) und die Stutzen (22) einen mit dem Innengewindeabschnitt (66) in Gewindeeingriff bringbaren Außengewindeabschnitt (74) aufweisen, dass der Außengewindeabschnitt (74) sowohl von der Stirnwand des Vorratsbehältnisses (12) als auch von den Austragenden (28) der Stutzen (22) um mindestens die axiale Erstreckung des Innengewindeabschnitts (66) des Betätigungselements (62) beabstandet angeordnet ist und dass der Innengewindeabschnitt (66) des Betätigungselements (62) um zumindest die axiale Erstreckung des Außengewindeabschnitts (74) der Stutzen (22) von der Anlagefläche (70) des Betätigungselements (62) beabstandet an dem dem Vorratsbehältnis (12) zugewandten Ende (64) des Betätigungselements (62) angeordnet ist.

14. Vorrichtung nach Anspruch 12 oder 13, **dadurch gekennzeichnet, dass** das Betätigungselement (62) die Haltehülse (122) zum Halten der Mischereinheit (77) ist.

## Claims

1. A device for the discharge of a pasty two-component mixture comprising:
- a supply container (112) with two chambers (114) for respectively one pasty component of the mixture, the supply container (112) being provided with a respective outlet stub (120) for each chamber (114),
- a mixer unit (132) comprising a tubular mixer housing (134) with a mixer element (138) arranged therein, the mixer housing (134) comprising a coupling end (130) to be coupled to the supply container (112) and having a two inlet stubs (142) and two channels (144) for the pasty components of the mixture leading to the mixer element (136), and comprising, on its opposite end, an outlet opening (140) for the mixture, the inlet stubs (142) being adapted for insertion into the outlet stubs (120) or vice versa, and
- a holding shell (122) for the coupling end (130) of the mixer housing (134) arranged for rotation on the supply container and undetachably held thereon, the holding shell (122) surrounding the two outlet stubs (120) and comprising a recess (126) of a shape at least in parts substantially identical with the cross sectional shape of the coupling end (130) of the mixer housing (134), the holding shell (122) being rotatable between a receiving rotational position in which the recess (126) is oriented corresponding to the orientation of the coupling end (130) of the mixer housing (134) in the state where the inlet stubs (142) are connected to the outlet stubs (120) of the supply container (122), and a locking rotational position in which at least a part of the recess edge (128) of the holding shell (122) is in engagement over parts of the coupling end (130) of the mixer housing (134).

2. The device according to claim 1, **characterized in that** the coupling end (130) of the mixer housing (134) has a substantially oval cross-sectional shape and comprises two diametrically opposite flange portions (146) radially projecting beyond the tubular portion of the mixer housing (134) and provided for engagement from above through the recess edge (128) of the holding shell (122) in the locking rotational position of the recess edge.

3. The device according to claim 1 or 2, **characterized in that** the supply container (112) and the holding shell (122) are provided with cooperating stopper elements (148,150) for limiting the rotational movement of the holding shell (122) between the receiving and the locking rotational positions thereof.

4. The device according to any one of claims 1 to 3, **characterized in that** the supply container (112) and the holding shell (122) have arranged thereon devices for preventing unintended advance rotation and/or reverse rotation of the holding shell (122) in the receiving and the locking rotational positions thereof.

5. The device according to any one of claims 1 to 4, **characterized in that** the supply container (12;122) comprises an end wall (118;14,14') formed with an abutment plane (47) for the end faces (44,46;44',46') of two tube bags (32,34;32',34') to be inserted into the chambers (114), that the two outlet stubs (120;22;22') have respectively an axially displaceable piercing tube (48,50;48',50') arranged therein, and that the piercing tubes (48,50;48',50') can be manually displaced from a retracted position in which the piercing tubes (48,50;48',50') do not extend beyond the abutment plane (47;47') into an advanced position in which in the piercing tubes (48,50;48',50') extend beyond the abutment plane (47;47').

6. The device according to claim 5, **characterized in that** the piercing tubes (48,50;48',50') in their advanced positions are arranged in the stubs (120;22;22') while secured against undesired return movement in the direction of the retracted positions.

7. The device according to claim 5 or 6, **characterized in that** the piercing tubes (48,50;48',50') in their retracted positions project beyond the discharge end (28,28') of the stubs (120;22;22') facing away from the end wall (118;14;14').

8. The device according to any one of claims 5 to 7, **characterized in that** the piercing tubes (48,50;48',50') in their retracted positions are arranged in the stubs (22;22') while secured against undesired movements in the direction of the advanced positions.

9. The device according to claims 7 and 8, **characterized in that** a removable protective cap (78) can be pushed over the discharge end (28') of the stubs (22') and be fixed to the stubs (22').

10. The device according to claims 7 and 8, **characterized in that** the piercing tubes (48",50"), on their ends facing away from the supply container (112), are provided with an outer projection (72"), and that a removable spacer (84) can be positioned between the outer projections (72") and the discharge ends (28") of the stubs (22").

11. The device according to any one of claims 5 to 10, **characterized in that** an axially displaceable operating element (62) is arranged externally around the stubs (22) for moving the piercing tubes (48,50) from the retracted positions into the advanced positions, the operating element (62) comprising an abutment face (70) for abutment on the piercing tubes (48,50).

12. The device according to claim 11, **characterized in that** the operating element (62) can be locked, in two movement positions, to the stub (22) and/or to the supply container (12) for preventing undesired axial movements.

13. The device according to claim 12, **characterized in that** the operating element (62) comprises an inner thread portion (66) and the stubs (22) comprise an outer thread portion (74) adapted for threaded engagement with the inner thread portion (66), that the outer thread portion (74) is spaced from the end wall of the supply container (12) as well as from the discharge ends (28) of the stubs (22) by at least the axial extension of the inner thread portion (66) of the operating element (62), and that the inner thread portion (66) of the operating element (62) is arranged, while spaced from the abutment face (70) of the operating element (62) by at least the axial extension of the outer thread portion (74) of the stubs (22), on the end (64) of the operating element (62) facing towards the supply container (12).

14. The device according to claim 12 or 13, **characterized in that** the operating element (62) is the holding shell (122) for holding the mixer unit (77).

## Revendications

1. Dispositif pour distribuer un mélange pâteux à deux composantes, comportant
- un réservoir (112) à deux chambres (114) pour une composante pâteuse respective du mélange, le réservoir (112) comprenant un manchon de sortie (120) pour chaque chambre (114),
- une unité de mélange (132) qui comprend un boîtier mélangeur tubulaire (134) avec un élément mélangeur (138) agencé dans celui-ci, le boîtier mélangeur (134) comprenant une extrémité d'accouplement (130) susceptible d'être accouplée au réservoir (112) et présentant deux manchons d'entrée (142) ainsi que deux canaux (144) menant vers l'élément mélangeur (136) pour les composantes pâteuses du mélange et à son extrémité opposée une ouverture de sortie (140) pour le mélange, et les manchons d'entrée (142) sont susceptibles d'être enfichés dans les manchons de sortie (120) ou inversement, et
- une douille de maintien (122) pour l'extrémité d'accouplement (130) du boîtier mélangeur (134), ladite douille étant montée mobile en rotation sur le réservoir (112) et maintenue imperdable sur le réservoir (112), la douille de maintien (122) entourant les deux manchons de sortie (120) et présentant un évidement (126) dont la forme est au moins par tronçons sensiblement égale à la forme de section transversale de l'extrémité d'accouplement (130) du boîtier mélangeur (134), la douille de maintien (122) étant mobile en rotation entre une position de rotation de réception dans laquelle l'évidement (126) est orienté en correspondance de l'orientation de l'extrémité d'accouplement (130) du boîtier mélangeur (134), les manchons d'entrée (142) étant reliés aux manchons de sortie (120) du réservoir (112), et une position de rotation de verrouillage dans laquelle une partie au moins du bord (128) de l'évidement de la douille de maintien (122) coiffe des parties de l'extrémité d'accouplement (130) du boîtier mélangeur (134).

2. Dispositif selon la revendication 1, **caractérisé en ce que** l'extrémité d'accouplement (130) du boîtier mélangeur (134) présente une section transversale sensiblement ovale et comprend deux tronçons de bride (146) diamétralement opposés et dépassant radialement au-delà de la partie tubulaire du boîtier mélangeur (134) et destinés à être coiffés par le bord (128) de l'évidement de la douille de maintien (122) dans sa position de rotation de verrouillage.

3. Dispositif selon l'une ou l'autre des revendications 1 et 2, **caractérisé en ce qu'**il est prévu des éléments de butée (148, 150) en coopération sur le réservoir (112) et sur la douille de maintien (122) pour limiter le mouvement de rotation de la douille de maintien (122) entre sa position de rotation de réception et sa position de rotation de verrouillage.

4. Dispositif selon l'une des revendications 1 à 3, **caractérisé en ce qu'**il est prévu sur le réservoir (112) et sur la douille de maintien (122) des organes pour empêcher une rotation accidentelle en avance et/ou en retour de la douille de maintien (122) dans sa position de rotation de réception et dans sa position de rotation de verrouillage.

5. Dispositif selon l'une des revendications 1 à 4, **caractérisé en ce que** le réservoir (12 ; 122) comprend une paroi frontale (118 ; 14 ; 14') qui présente un plan d'appui (47) pour les surfaces frontales (44, 46 ; 44', 46') de deux sacs tubulaires (32, 34 ; 32', 34') susceptibles d'être mis en place dans les chambres (114), **en ce qu'**un petit tube de percée respectif (48, 50 ; 48', 50') axialement mobile est agencé dans les deux manchons de sortie (120 ; 22, 22'), et **en ce que** les petits tubes de percée (48, 50 ; 48', 50') sont déplaçables manuellement depuis une position de retrait dans laquelle les tubes de percée (48, 50 ; 48', 50') ne dépassent pas au-delà du plan d'appui (47 ; 47') jusque dans une position d'avance dans laquelle les tubes de percée (48, 50 ; 48', 50') dépassent au-delà du plan d'appui (47 ; 47').

6. Dispositif selon la revendication 5, **caractérisé en ce que** dans leurs positions d'avance les tubes de percée (48, 50 ; 48', 50') sont agencés dans les manchons (120 ; 22, 22') de façon bloquée à l'encontre d'un mouvement en retour accidentel en direction des positions de retrait.

7. Dispositif selon l'une ou l'autre des revendications 5 et 6, **caractérisé en ce que** dans leurs positions de retrait les tubes de percée (48, 50 ; 48', 50') dépassent au-delà de l'extrémité de distribution (28 ; 28') des manchons (120 ; 22, 22') détournée de la paroi frontale (118 ; 14, 14').

8. Dispositif selon l'une des revendications 5 à 7, **caractérisé en ce que** dans leurs positions de retrait les tubes de percée (48, 50 ; 48', 50') sont agencés dans les manchons (22 ; 22') de façon bloquée à l'encontre de mouvements accidentels en direction des positions d'avance.

9. Dispositif selon les revendications 7 et 8, **caractérisé en ce qu'**un capuchon de couverture amovible (78) est susceptible d'être emmanché par-dessus l'extrémité de distribution (28') des manchons (22') et d'être fixé sur les manchons (22').

10. Dispositif selon les revendications 7 et 8, **caractérisé en ce que** les tubes de percée (48", 50") présentent, à leurs extrémités détournées du réservoir (112), une saillie extérieure (72"), et **en ce qu'**un élément écarteur amovible (84) est susceptible d'être positionné entre les saillies extérieures (72") et les extrémités de distribution (28") des manchons (22").

11. Dispositif selon l'une des revendications 5 à 10, **caractérisé en ce qu'**il est prévu, à l'extérieur tout autour des manchons (22), un élément d'actionnement (62) déplaçable axialement pour déplacer les tubes de percée (48, 50) hors des positions de retrait jusque dans les positions d'avance, l'élément d'actionnement (62) présentant une surface d'appui (70) pour l'appui contre les tubes de percée (48, 50).

12. Dispositif selon la revendication 11, **caractérisé en ce que** l'élément d'actionnement (62) est susceptible d'être verrouillé à l'encontre de mouvements axiaux accidentels dans deux positions de déplacement sur le manchon (22) et/ou sur le réservoir (12).

13. Dispositif selon la revendication 12, **caractérisé en ce que** l'élément d'actionnement (62) présente un tronçon taraudé (66) et les manchons (22) présentent un tronçon fileté (74) susceptible d'être amené en engagement avec le tronçon taraudé (66), **en ce que** le tronçon fileté (74) est agencé de façon distante aussi bien par rapport à la paroi frontale du réservoir (12) que par rapport aux extrémités de distribution (28) des manchons (22), et ceci d'une valeur qui correspond au moins à l'extension axiale du tronçon taraudé (66) de l'élément d'actionnement (62), et **en ce que** le tronçon taraudé (66) de l'élément d'actionnement (62) est agencé à l'extrémité (64) de l'élément d'actionnement (62) tournée vers le réservoir (12), et ceci de façon distante par rapport à la surface d'appui (70) de l'élément d'actionnement (62) au moins de la valeur qui correspond à l'extension axiale du tronçon fileté (74) des manchons (22).

14. Dispositif selon l'une ou l'autre des revendications 12 et 13, **caractérisé en ce que** l'élément d'actionnement (62) est la douille de maintien (122) pour maintenir l'unité de mélange (77).
